## Europäisches Patentamt
## European Patent Office
## Office européen des brevets

(19)

(11) Publication number: **0 003 887**
**B1**

(12)

# EUROPEAN PATENT SPECIFICATION

(45) Date of publication of patent specification: **23.12.81**

(51) Int. Cl.³: **F 16 H 17/02, G 05 D 15/01**
**//F16H15/20**

(21) Application number: **79300227.0**

(22) Date of filing: **14.02.79**

(54) Traction pressure control system.

(30) Priority: **16.02.78 US 878664**

(43) Date of publication of application:
**05.09.79 Bulletin 79/18**

(45) Publication of the grant of the European patent:
**23.12.81 Bulletin 81/51**

(84) Designated Contracting States:
**CH DE FR GB NL SE**

(56) References cited:
**DE - A - 2 012 092**
**DE - A - 2 607 558**
**US - A - 3 222 944**
**US - A - 3 280 646**
**US - A - 4 004 648**

(73) Proprietor: **BALES-MCCOIN RESEARCH INC.**
**4401 Montana**
**El Paso Texas 79903 (US)**

(72) Inventor: **McCoin, Dan K.**
**4401 Montana**
**El Paso Texas 79903 (US)**

(74) Representative: **Allen, William Guy Fairfax et al,**
**J.A. KEMP & CO. 14 South Square Gray's Inn**
**London WC1R 5EU (GB)**

Courier Press, Leamington Spa, England.

## Traction pressure control system

This invention relates to variable drive transmissions of the traction gear type, and in particular to regulation of the surface contact pressure between the traction gear elements therein for slip control purposes.

Most traction type transmissions involve the use of an overabundance of contact pressure between the traction gear elements to insure that no excessive slip occurs despite the use of a variety of techniques to vary or adjust the contact pressure. According to United States Patent No. 3,745,844, for example, slippage is measured through a hydromechanical arrangement relying on the final transmission gear ratio and output torque, to produce a signal designed to increase contact pressure and ultimately eliminate all slippage. Although the foregoing prior art arrangement represents an effort to minimise pressures on the traction gear elements and reduce radial bearing loads, a gross analogue approach is relied upon not capable of achieving the precise operations necessary for optimising traction conditions.

A further contact pressure control system for an infinitely variable-ratio friction drive is described in US - A - 3 280 646, the contact pressure being varied in dependence on transmission ratio, engine speed and torque load. There is no measurement of slip or attempt to maintain this within a predetermined range of values.

In accordance with the present invention, there is provided a transmission having input and output members, traction drive elements in engagement with each other under a surface contact pressure to establish a power transmitting path between said input and output members and drive ratio control means operative through said traction drive elements to change the drive ratio of the transmission, and servo means for varying the surface contact pressure, characterised by means for monitoring the drive ratio control means and the speeds of said input and output members, and data processing means connected to said monitoring means and the servo means for continuously adjusting the contact pressure to establish an optimum amount of slippage between said traction drive elements at each of the drive ratios of the transmission.

Logic controlled means may also be provided in the data processor for establishing an initial contact pressure for a neutral, no-load condition of thre transmission of zero slip to permit the system to monitor relative speeds and thereby identify the exact location of contact upon initial start up. Precision, manufacturing, assembly and maintenance problems and associated sync errors are thereby avoided.

The invention will be further described with reference to the accompanying drawings in which like numerals refer to like parts throughout, and in which:

Figure 1 is a schematic illustration showing a system embodying the present invention;

Figure 2 is a graph illustrating the manner in which empirical data is obtained for use in the system depicted in Figure 1;

Figure 3 is a circuit diagram illustrating the details of the control unit shown in Figure 1;

Figure 4 is a schematic illustration of a modified version of the system shown in Figure 1;

Figure 5 is another graph showing the manner in which empirical data is obtained.

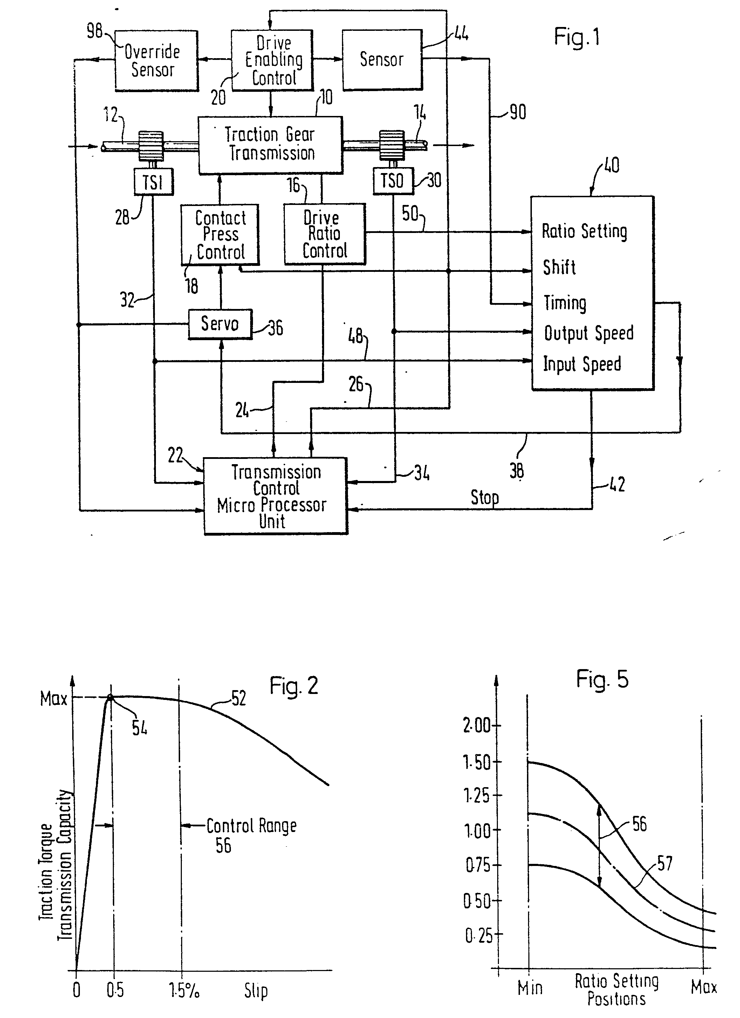

Figure 1 schematically illustrates a traction gear type of transmission 10 having an input shaft 12 and an output shaft 14. The drive ratio of the transmission is varied in response to shift of a traction gear element by a drive ratio control component 16. The surface contact pressure between the engaging traction gear elements, is controlled by a contact pressure control component 18. The transmission of power to the output shaft 14 from an engine connected to the transmission through input shaft 12, may be selectively interrupted by means of a drive enabling control assembly 20 associated with the transmission 10. Transmissions of this type are already known.

Also, previously known in the art are transmission control systems, such as the microprocessor unit 22 diagrammed in Figure 1 from which commands are fed through line 24 to the drive ratio control 16 for automatically varying the drive ratio and establishing the desired condition in the drive enabling control 20 through line 26. Input data to the unit 22 is obtained from an input speed sensor 28 and an output speed sensor 30, respectively associated with the input and output shafts. These sensors may be e.g. of the mechanical breaker-contact, electro-optical or magnetic pickup type from which signal pulses are generated and fed to unit 22 by signal input lines 32 and 34. Thus, the speed signals as well as other factors such as engine throttle, cylinder vacuum and control lever position may be processed by unit 22 to supply commands through output lines 24 and 26 to control operation of the transmission in a manner appropriate for propulsion of an automotive vehicle.

The surface contact pressure is controlled through the contact pressure control 18 by establishing a pressure through signal line 26 for initial startup positional computation under no-load no-slip conditions and varied by a servo 36 receiving servo commands through line 38 from a traction pressure control unit 40 to which the speed signal lines 32 and 34 are connected. The condition of the drive enabling control 20 is monitored through sensor 44 connected by signal line 46 to the unit 40 and through an overload sensor 48 to the servo 36.

Output signal line 26 from the unit 22 to drive enabling control 20 is also connected to control unit 40. Finally, the condition of the drive ratio control 16 is monitored through signal line 50 connected to the control unit 40. The control unit 40 is operative to control the slip between the traction gear elements of the transmission so as to optimise traction or provide the best power transfer capacity under minimum loading and hence the longest service life for components by varying the pressure.

The ratio of input and output speeds of shafts 12 and 14 are compared with the drive ratio setting of the transmission for digitally computing actual slippage at all times under varying load conditions within the transmission drive ratio range. Contact pressure is continuously adjusted by comparison of the computed slippage with slippage derived from an optimum slip curve empirically determined for the traction component geometry associated with the particular transmission. The empirical slip curve data is stored in a programmable read only memory (PROM) within a control loop to produce the necessary signal commands for adjusting the contact pressure so as to bring the computed slippage into line with optimum values corresponding to the stored empirical data.

The graph of Figure 2 illustrates the manner in which the empirical data aforementioned is obtained. A typical traction curve 52 is shown plotted from simultaneous traction transfer torque and percent slippage measurements made on a transmission under laboratory test loading and contact pressures independently applied to achieve the desired slippages. As noted in Figure 2, the traction torque increases from 0 to 0.5% slip as a substantially linear function of slippage up to a maximum value at load point 54. From about 0.5% to 1.5% slip, the transmitted torque remains substantially constant to establish a control range 56 and then begins a decrease with increased slip. Testing is performed at, and control ranges 56 plotted for, different ratio settings of the transmission as depicted in the graph of Figure 5. Thus, a control range 56 of slip may be empirically determined for each drive ratio and the contact pressure adjusted to maintain actual slip at some value within the optimum control range empirically determined for the particular drive ratio from a nominal slip curve 57 as shown in Figure 5.

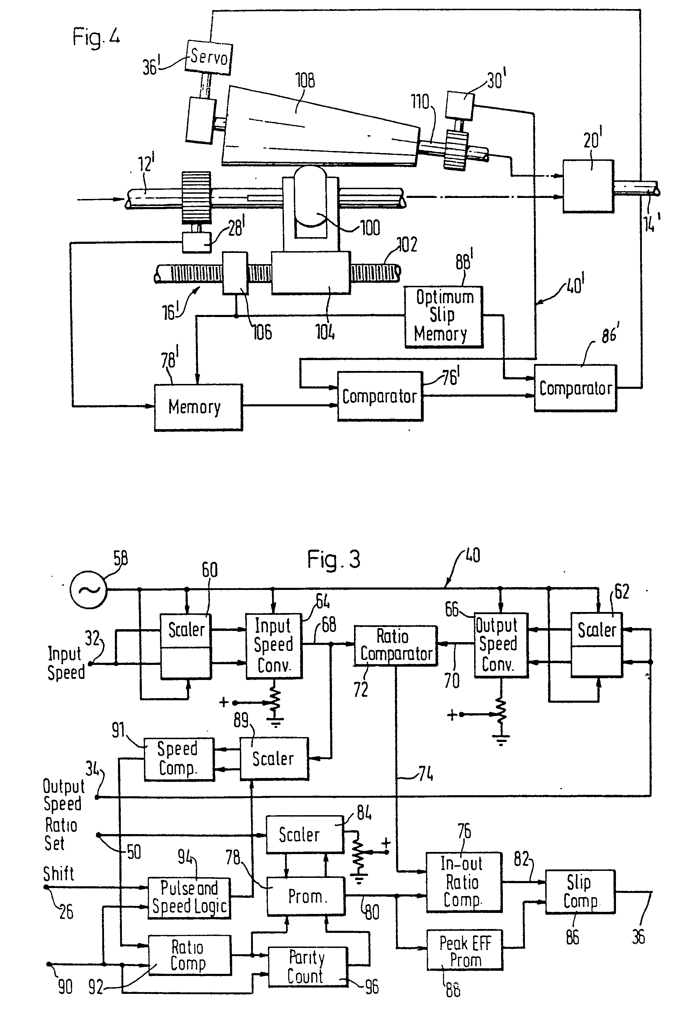

Figure 3 illustrates one method of implementing the invention. Clock pulses of 100 MHz, for example, are provided by a common base oscillator 58 for the control unit 40 and fed to scaler devices 60 and 62 to which the input and output speed signal lines 32 and 34 are connected. The outputs of the scaler devices 60 and 62 are fed to converter units 64 and 66 also driven by the clock pulses to provide converted speed signal pulses in lines 68 and 70 reflecting transmission input and output speeds.

Lines 68 and 70 being connected to the input terminals of comparator 72 produce a speed ratio output in line 74 fed to one of the inputs of a comparator 76. Comparator 76 compares the actual speed ratio with information stored in memory 78 and fed by line 80 to the other input of comparator 76 to produce an output in line 82 indicative of slippage for a particular drive ratio at which the transmission is set. The information stored in memory 78 corresponds to drive ratios computed without slippage and is read out through line 80 in response to input from line 50 through which the drive ratio setting of the drive ratio control 16 is monitored. A scaler device 84 updates the read out of memory 80 in accordance with changes in drive ratio. The output in line 82 is operative through a correction slip comparator 86 to drive the servo 36 for effecting a change in contact pressure. The computed slippage signal in line 82 is, however, compared with the empirically determined peak efficiency data hereinbefore discussed with respect to Figures 2 and 5, stored in memory 88 and read out in response to the input in line 80. Thus, the output of comparator 86 will operate servo 36 in order to adjust contact pressure when the digitally computed slip deviates from the empirical optimum slip.

The foregoing description of the control unit 40 explains operation under running conditions with the transmission in gear. During normal start up, the drive enabling control 20 unloads the transmission under command of a zero demand signal in line 26 from the unit 22. The zero demand signal is also applied to the contact pressure control 18 as shown in Figure 1 to establish a preselected nominal pressure under neutral transmission conditions to ensure zero slip during calculating operations. In the neutral condition, established by the drive enabling control 20 unloading the transmission, line 90 connected to sensor 44 conducts gating pulses to logic 94. The gating pulses on line 90 represent the actual unloaded transmission output speed determined from a fixed gear ratio between the drive enabling control 20 and the output shaft 14. These gating pulses are counted by logic 94 enabled by the zero demand signal in line 26. At the same time, unit 22 feeds commands through line 24 to the drive ratio control 16 to upshift the transmission toward a high forward speed until the pulse rate of the signal pulses in line 90 increases to a point satisfying logic 94. An enabling signal is then generated and applied to scaler 89. Upshift operation of the drive ratio control 16 then stops. In this manner, an initial drive ratio is established corresponding to zero slippage occurring under the nominal contact pressure established for no-load or neutral conditions. Also, accurate zeroing calculations are assured by performing computations at a low ratio through the transmission.

When the pulse rate of the signal in line 90 is at or above the preset point aforementioned, unit 40 begins timing the gating pulses in line 90 by comparison with the converted input speed signal received from enabled scaler 89 and converter 91 through comparator 92 until a parity counter 96 is satisfied to establish a stabilised drive ratio read out from memory 78 through line 80 to supply an equivalent output speed signal to comparator 76 for establishing the aforementioned initial contact pressure in the neutral condition of the transmission. The memory 78 is of the programmable read only type containing data of gear ratios in relation to the relative drive ratio determining positions of the engaging traction elements in the transmission. This data is based on fixed gear radii functions excluding slip under load for the particular transmission. The computed drive ratio data is addressed to in memory 78 by the output of comparator 92 and the information fed to scaler device 84 to select the stored drive ratio data to be read out for comparison with the actual speed ratio output in line 74 from comparator 72.

Any overload condition felt by the drive enabling control 20 is detected by sensor 98 as shown in Figure 1 to disable the servo 36 and thereby prevent any increase in contact pressure. Also, the components 64, 66, 84, 94 as shown in Figure 3 are provided with presettable means to provide unit 40 with sequence events data and safety interlock capacity.

A simplified version of the system depicted in Figures 1 and 3 is shown in Figure 4. The transmission includes input shaft 12' driving a traction gear element 100 that is slidably displaceable along shaft 12' by means of a drive ratio control 16' which includes a rotatable screw shaft 102, an axially shiftable nut element 104 on which the gear element 100 is carried and a sensor 106 mounted on the screw shaft for monitoring the axial position of the gear element 100 along a cone gear element 105 with which the gear element 100 is in engagement. The cone gear element 108 is rotatably mounted by and fixed to shaft 110 which may be pivotally displaceable under a force exerted by servo 36' to adjust the contact pressure between the engaging gear elements 100 and 108. A disengageable gear type of drive enabling control 20' drivingly interconnects the input shaft 12' and shaft 110 to the output shaft 14'. Speed sensors 28' and 30' are associated with shafts 12' and 110 respectively to supply speed signals to the traction control unit 40'.

In Figure 4, the components of the control unit 40' responsible for automatic zeroing operation as hereinbefore described with respect to Figures 1 and 3, are simplified. The drive ratio setting or axial position of gear element 100 is monitored by sensor 106 to supply signal pulses to memory 78' to which input speed signals are fed from sensor 28' in order to read out stored information selected by the drive ratio signal from sensor 106 based on gear ratio computations as aforementioned in connection with memory 78. Zeroing calculations may be made at any ratio setting because the same positive and acceptable coupling ratio exists regardless of the over-all transmission drive ratio. Thus, at start-up, only some nominal contact pressure is applied by servo 36' to ensure zero slip in the no-load neutral condition. Once the measured ratio identifies the exact location of the traction gear element 100, shift pulses from sensor 106 will update the output of memory 78' as the correct zero slip for the new ratio setting. The output from memory 78' is compared with the output speed signal from sensor 30' in comparator 76' to produce a digitally computed slip signal fed to one input of comparator 86'. The other input of comparator 86' receives a signal from memory 88' within which the empirical data is stored as indicated with respect to memory 88 in Figure 3. The data read out from memory 88' corresponds to the drive ratio setting of the transmission by virtue of the signal fed thereto by sensor 106. Thus, the output of comparator 86' will be operative through servo 36' to effect continuous adjustment of the contact pressure when the transmission is in gear as hereinbefore described with respect to Figures 1 and 3. The arrangement shown in Figure 4 is, however, somewhat modified in that the output speed signal from sensor 30' directly measures the speed of driven cone element 108 rather than the output shaft 14'.

It will be appreciated that although the present invention has been described above with reference to a digital implementation thereof, an analog implementation of the optimum slip control loop using analog amplifiers and comparators is also possible.

## Claims

1. A transmission having input and output members, traction drive elements in engagement with each other under a surface contact pressure to establish a power transmitting path between said input and output members and drive ratio control means operative through said traction drive elements to change the drive ratio of the transmission, and control means for varying the surface contact pressure, characterised in that said control means includes means for monitoring the drive ratio control means and the speeds of said input and output members, data processing means connected to said monitoring means for calculating the slippage between said traction drive elements for each of the drive ratios of the transmission, memory means for storing empirical data representing optimum slippage for each of the drive ratios, comparator means connected to said memory means and the data processing means for producing a corrective output signal, and servo means connected to said comparator means for adjusting the contact pressure in response to said corrective output signal.

2. The transmission of claim 1 characterised in that said monitoring means includes speed sensors operatively connected to the input and output members, and a position sensor operatively connected to the drive ratio control means.

3. The transmission of claim 2 characterised in that said data processing means includes means for comparing the actual speeds of the input and output members to determine the actual speed ratio, means responsive to the output from the position sensor of the monitoring means for calculating the speed ratio without slippage, and means for comparing the calculated speed ratio with said actual speed ratio for determining actual slippage.

4. The transmission of Claim 1 or 2, characterised in that said data processing means include means comparing the input speed with data from the monitoring means representing the set speed ratio of the drive ratio control means for calculating the output speed without slippage, and means for comparing the calculated output speed with the actual output speed for determining the actual slippage.

5. The transmission of any one of the preceding claims, characterised by logic means connected to the monitoring means and the servo means for establishing an initial surface contact pressure.

6. A transmission having input and output members, traction drive elements in engagement with each other under a surface contact pressure to establish a power transmitting path between said input and output members and drive ratio control means operative through said traction drive elements to change the drive ratio of the transmisison, and servo means for varying the surface contact pressure, characterised by means for monitoring the drive ratio control means and the speeds of said input and output members, and data processing means connected to said monitoring means and the servo means for continuously adjusting the contact pressure to establish an optimum amount of slippage between said traction drive elements at each of the drive ratios of the transmission.

7. The transmission of claim 6 wherein said monitoring means includes speed sensors operatively connected to the input and output members, and a position sensor operatively connected to the drive ratio control means.

8. The transmission of claim 7 wherein said data processing means includes means for comparing the actual speeds of the input and output members to determine the actual speed ratio, means responsive to the output from the position sensor of the monitoring means for calculating the speed ratio without slippage, and memory means for storing empirical data representing optimum slippage for each drive ratio, and comparator means for connecting said memory means and comparing means to the servo means.

9. The transmission of claim 7 wherein said data processing means include means comparing the input speed with data from the monitoring means representing the set speed ratio of the drive ratio control means for calculating the output speed without slippage and memory means for storing empirical data representing optimum slippage for each drive ratio, and comparator means for connecting said memory means and comparing means to the servo means.

**Revendications**

1. Transmission comprenant une transmission ayant des éléments d'entrée et de sortie, des éléments d'entraînement de traction venant en prise les uns avec les autres sous une pression de contact de surface de façon à établir une voie de transmission de la force entre lesdits éléments d'entrée et de sortie et des moyens de commande du rapport d'entraînement agissant à travers les éléments d'entraînement de traction pour changer le rapport d'entraînement de la transmission et des moyens de commande pour faire varier la pression de contact de surface, caractérisée par le fait que lesdits moyens de commande comprennent des moyens pour surveiller les moyens de commande du rapport d'entraînement et les vitesses desdits éléments d'entrée et de sortie, des moyens de traitement de données reliés auxdits moyens de surveillance pour calculer le glissement entre lesdits éléments d'entraînement de traction pour chacun des rapports d'entraînement de la transmission, des moyens de mémoire pour stocker des données empiriques représentant le glissement optimum pour chacun des rapports d'entraînement, des moyens comparateurs reliés auxdits moyens de mémoire et aux moyens de traitement des données pour produire un signal de sortie correctif et des moyens asservis reliés auxdits moyens comparateurs pour ajuster la pression de contact en réponse audit signal de sortie correctif.

2. Transmission selon la revendication 1, caractérisée par le fait que lesdits moyens de surveillance comprennent des détecteurs de vitesse fonctionnellement reliés aux éléments d'entrée et de sortie, et un détecteur de position fonctionnellement relié aux moyens de commande du rapport d'entraînement.

3. Transmission selon la revendication 2, caractérisée par le fait que lesdits moyens de traitement de données comprennent des moyens pour comparer les vitesses réelles des éléments d'entrée et de sortie pour déterminer le rapport de vitesse réelle, des moyens sensibles à la sortie du détecteur de position des moyens de surveillance pour calculer le rapport de vitesse sans glissement, et des moyens pour comparer le rapport de vitesse calculé avec ledit rapport de vitesse réelle pour déterminer le glissement réel.

4. Transmission selon l'une des revendications 1 ou 2, caractérisée par le fait que lesdits moyens de traitement de données comprennent des moyens comparant la vitesse d'entrée avec des données issues des moyens de surveillance et représentant le rapport de vitesse de consigne des moyens de commande du rapport d'entraînement pour calculer la vitesse de sortie sans glissement et des moyens pour comparer la vitesse de sortie calculée avec la vitesse de sortie réelle pour déterminer le glissement réel.

5. Transmission selon l'une des revendications précédentes, caractérisée par des moyens de logique reliés aux moyens de surveillance et aux moyens asservis pour établir une pression de contact de surface initiale.

6. Transmission comportant une transmission ayant des éléments d'entrée et de sortie, des éléments d'entraînement de traction venant en prise les uns avec les autres sous une pression de contact de surface de façon à établir un chemin de transmission de la force entre lesdits éléments d'entrée et de sortie et des moyens de commande du rapport d'entraînement agissant à travers lesdits éléments d'entraînement de traction pour changer le rapport d'entraînement de la transmission, caractérisée par des moyens asservis pour faire varier la pression de contact de surface, des moyens pour surveiller les moyens de commande du rapport d'entraînement et les vitesses desdits éléments d'entrée et de sortie, et des moyens de traitement de données reliés auxdits moyens de surveillance et aux moyens asservis pour ajuster de façon continue la pression de contact afin d'établir une quantité optimum de glissement entre lesdits éléments d'entraînement de traction à chacun des rapports d'entraînement de la transmission.

7. Transmission selon la revendication 6, caractérisée par le fait que lesdits moyens de surveillance comprennent des détecteurs de vitesse fonctionnellement reliés aux éléments d'entrée de de sortie et un détecteur de position fonctionnellement relié aux moyens de commande du rapport d'entraînement.

8. Transmission selon la revendication 7, caractérisée par le fait que lesdits moyens de traitement de données comprennent des moyens pour comparer les vitesses réelles des éléments d'entrée et de sortie pour déterminer le rapport de vitesse réelle, des moyens sensibles à la sortie provenant du détecteur de position des moyens de surveillance pour calculer le rapport de vitesse sans glissement, et des moyens de mémoire pour stocker des données empiriques représentant le glissement optimum pour chaque rapport d'entraînement et des moyens comparateurs pour relier lesdits moyens de mémoire et les moyens comparateurs aux moyens asservis.

9. Transmission selon la revendication 7, caractérisée par le fait que lesdits moyens de traitement de données comprennent des moyens pour comparer la vitesse de sortie avec des données provenant des moyens de surveillance et représentant le rapport de vitesse de consigne des moyens de commande du rapport d'entraînement pour calculer la vitesse de sortie sans glissement et des moyens de mémoire pour stocker des données empiriques représentant le glissement optimum pour chaque rapport d'entraînement et des moyens comparateurs pour relier lesdits moyens de mémoire et les moyens pour comparer, aux moyens asservis.

## Patentansprüche

1. Kraftübertragung mit: einem Antriebs- und Abtriebs-Teile aufweisenden Getriebe und Übertragungsgliedern, die durch unter Druck erfolgende Oberflächenberührung reibschlüssig einen Kraftfluß zwischen den Antriebs- und Abtriebs- Teilen bewirken, einer das Übersetzungsverhältnis durch Einwirkung auf die Ubertragungsglieder ändernden Steueranordnung sowie einer den Anpressdruck der einander berührenden Oberflächen der Übertragungsglieder ändernden Steuervorrichtung, und gekennzeichnet durch die Merkmale: eine Überwachungsanordnung überwacht die Übersetzungs- Steueranordnung sowie das Verhältnis der Antriebs- und Abtriebs- Drehzahlen, die Überwachungsanordnung ist an eine den Schlupf für sämtliche Übersetzungsverhältnisse der Kraftübertragung im Bereich der Übertragungsglieder bestimmende Datenverarbeitung angeschlossen, in Speichern sind für jedes Übersetzungsverhaltnis auf Erfahrung beruhende Schlupf-Bestwerte gespeichert, mindestens ein Vergleicher bewirkt mit den Speichern der Datenverarbeitung ein berichtigendes Ausgleichssignal und ein mit dem Vergleicher verbundenes Regelgerät berichtigt in Abhängigkeit von dem Ausgleichssignal den Anpressdruck.

2. Kraftübertragung nach Anspruch 1, dadurch gekennzeichnet, daß die Überwachungsanordnung sowohl den Antriebs- als auch den Abtriebs-Teilen wirkungsmäßig zugeordnete Drehzahl-Fühler beinhaltet und daß mit der Übersetzungs- Steueranordnung ein Stellungs-Fühler wirkungsmäßig verbunden ist.

3. Kraftübertragung nach einem der Ansprüche 1 bzw. 2, dadurch gekennzeichnet, daß die Datenverarbeitung eine das jeweilige Drehzahlverhältnis bestimmende, die jeweiligen Drehzahlen der Antriebs- und Abtriebs- Teile vergleichende Vergleicher — Anordnung beinhaltet und daß ein von der Ausgabe aus dem Stellungs-Fühler der Überwachungsanordnung abhängiges Schaltglied zum Errechnen des schlupffreien Drehzahlverhältnisses, sowie ein das errechnete Drehzahlverhältnis mit dem jeweiligen tatsächlichen Drehzahlverhältnis vergleichendes, den jeweiligen Schlupf bestimmendes Schaltglied eingebaut ist.

4. Kraftübertragung nach mindestens einem der Ansprüche 1 bzw. 2, dadurch gekennzeichnet, daß die Datenverarbeitung einen vergleichenden Schaltkreis beinhaltet, der die Antriebsdrehzahl mit Werten aus der Überwachungsanordnung vergleicht, welche das vorgegebene Drehzahlverhältnis zum Errechnen der schulupffreien Abtriebsdrehzahl widerspiegeln, und daß zum Bestimmen des tatsächlichen Schlupfes ein die errechnete Abtriebsdrehzahl mit der tatsächlichen Ab triebsdrehzahl vergleichendes Schaltglied eingebaut ist.

5. Kraftübertragung nach mindestens einem der Ansprüche 1 bis 4, dadurch gekennzeichnet, daß ein Logikschaltkreis mit der Überwachungsanordnung und mit dem Regelgerät, einen Anfangs- Oberflächenberührungsdruck bewirkend, verbunden ist.

6. Kraftübertragung mit: einem Antriebs- und Abtriebs- Teile aufweisenden Getriebe, Übertragungsgliedern, die durch unter Druck erfolgende Oberflächenberührung reibschlüssig einen Kraftschluss zwischen den Antriebs- und Abtriebs- Teilen bewirken, einer das Übersetzungsverhältnis des Getriebes durch Einwirkung auf die Übertragungsglieder steuernden Steueranordnung einem den Oberflächenberührungsdruck verändernden Regelgerät, und mit den Kennzeichnenden Merkmalen: eine Überwachungsanordnung beeinflußt so wohl die Übersetzungs-Steueranordnung als auch die Drehzahlen der Antriebs- und Abtriebs-Teile und eine mit der Überwachungsanordnung verbundene Datenverarbeitungsanlage regelt über Anpassung des Anpressdruckes bei jedem Übersetzungsverhältnis ständig den Bestwert des Schlupfes zwischen den Ubertragungsgliedern ein.

7. Kraftübertragung nach Anspruch 6, dadurch gekennzeichnet, daß die Überwachungsanordnung durch mit dieser wirkungsmäßig verbundene Antriebsdrehzahl- sowie Abtriebsdrehzahl-Fühler und ferner durch einen wirkungsmäßig der Übersetzungsverhältnis-Steureranordnung zugehörigen Stellungsfühler beaufschlagt ist.

8. Kraftübertragung nach Anspruch 7, dadurch gekennzeichnet, daß die Datenverarbeitung beinhaltet: Vergleiche-Kreise zum Vergleichen der tatsächlichen Drehzahlen der Antriebs- und Abtriebs-Teile und zum Bestimmen des tatsächlichen Drehzahlverhältnisses, einen das schlupffreie Übersetzungsverhältnis aus dem Ausgang des Stellungsfühlers der Überwachungsanordnung rechnenden Schaltteil, Speicher zum Speichern von Erfahrungsbestwerten des Schlupfes für jedes Übersetzungsverhältnis und Vergleicher zum Verknüpfen mit den Speicher-Werten sowie mit Vergleichswerten zum Beeinflussen der Regelgeräte.

9. Kraftübertragung nach Anspruch 7, dadurch gekennzeichnet, daß die Datenverarbeitung beinhaltet: Vergleicher-Kreise zum Vergleichen der jeweiligen Antriebsdrehzahl mit Daten aus der Überwachungsanordnung, welche das eingestellte Übersetzungsverhältnis der Übersetzungs-Steuervorrichtung zum errechnen der Schlupffreien Abtriebsdrehzahl wiederspiegeln, Speicher zum Speichern von Erfahrungsbestwerten des Schlupfes für jedes Übersetzungsverhältnis und Vergleicher-Kreise zum Aufschalten der Signale aus den Speichern und aus den Vergleichern auf die Regelgeräte.

**O OO3 887**

Fig.1

Fig. 2

Fig. 5

**0 003 887**

Fig. 4

Fig. 3